# EUROPÄISCHE PATENTSCHRIFT

(11) **EP 1 053 496 B1**
(45) Veröffentlichungstag und Bekanntmachung des Hinweises auf die Patenterteilung: **13.03.2002**
(21) Anmeldenummer: 99934201.7
(22) Anmeldetag: 23.01.1999
(51) Int. Cl.: G02B 7/04

(54) **ZYLINDRISCHE FASSUNG FÜR VERSTELLBARE OPTISCHE BAUELEMENTE**
CYLINDRICAL MOUNT FOR ADJUSTABLE OPTICAL COMPONENTS
DOUILLE CYLINDRIQUE DESTINEE A DES COMPOSANTS OPTIQUES REGLABLES

(30) Priorität: 05.02.1998 DE 19804471
(43) Veröffentlichungstag der Anmeldung: 22.11.2000
(73) Patentinhaber: Leica Camera AG, 35606 Solms bei Wetzlar (DE)
(72) Erfinder: Jonas, Richard, 35576 Wetzlar (DE); Guth, Horst, 35583 Wetzlar (DE)
(74) Vertreter: Stamer, Harald
(86) Internationale Anmeldenummer: DE9900163
(87) Internationale Veröffentlichungsnummer: WO9940469

(56) Entgegenhaltungen:
- FR-A- 1 271 653
- US-A- 3 951 522
- PATENT ABSTRACTS OF JAPAN vol. 018, no. 321 (P-1756), 17. Juni 1994 & JP 06 075153 A (MITSUBISHI ELECTRIC CORP), 18. März 1994

## Beschreibung

Die Erfindung betrifft eine zylindrische Fassung für verstellbare optische Bauelemente.

Fassungen dieser Art sind beispielsweise aus US 3 951 522 für fotografische Objektive bekannt, in denen Linsenglieder zur Fokussierung oder Brennweitenänderung relativ zu anderen Linsengliedern axial verschoben werden. Bei der Verschiebung sollen im allgemeinen Drehungen der Linsenglieder vermieden werden, um Einflüsse von evtl. vorliegenden Zentrierfehlern zu vermeiden.

Die Objektive weisen zu diesem Zweck in einem feststehenden Fassungsteil eine oder mehrere parallel zur Zylinderachse verlaufende Ausfräsungen auf, in denen jeweils ein am Variator befestigtes Klötzchen geführt wird (Geradführung). Auf dem Klötzchen ist eine Rolle befestigt, die in eine in dem Kurventräger eingefräste Kurvenbahn eingreift. Bei einer Drehung des Kurventrägers wird der Variator entsprechend dem Kurvenverlauf entlang der Zylinderachse vor- und zurückgeschoben.

Der Variator ist als Zylinder ausgebildet, der aufgrund geeigneter Passung in dem feststehenden zylindrischen Fassungsteil gleitet. Über die in dem Kurventräger geführte Rolle wird auf den Variator auch eine Kraftkomponente senkrecht zur Zylinderachse ausgeübt, wenn Gleitwiderstände auftreten, so daß es zu leichten Kippungen in der Zylinderführung kommt. Diese werden im allgemeinen durch die Gleiteigenschaften der Zylinderoberflächen und Schmiermittel aufgefangen, können aber auch zu einer Schwergängigkeit oder sogar Verklemmung führen. Verkippungen des Variators bedeuten aber auch Verkippungen der in ihm gehaltenen optischen Bauelemente gegenüber der optischen Achse, so daß dadurch auch die Abbildungsqualität negativ beeinflußt wird.

Die Kurvenbahnen im Kurventräger und der Rollendurchmesser müssen sehr genau aufeinander abgestimmt sein, um Spielfreiheit bei Umkehrbewegungen zu gewährleisten. Aus Patent Abstracts of Japan JP 59087414 ist es bekannt, die Führungsbahn in einem feststehenden Fassungsteil trapezförmig auszubilden und den Rollendurchmesser so zu wählen, daß er von der breiteren Seite her in die Führungsbahn eingreifen kann. Durch einen federnden Andruck an die Trapezflanken wird Spielfreiheit erreicht. Die vorgenannte Kraftkomponente senkrecht zur Zylinderachse wird dadurch verstärkt und wirkt natürlich auch auf die Rollenachse, so daß es auch zu einer Schwergängigkeit der Rolle in der Kurvenbahn kommen kann. Gravierender ist jedoch, daß es bei mehreren Führungsbahnen, Kurvenbahnen und ihnen zugeordneten Übertragungsgliedern in einer Fassung aufgrund von Fertigungstoleranzen zu einer Überbestimmung der aneinander anzupassenden Bauelemente kommt, die dann in einer Schwergängigkeit der Zylinderführung resultiert.

Aus FR 1 271 653 ist eine Fassung bekannt, bei der ein innenliegender Variator auf seiner äußeren Umfangsfläche mit einer umlaufenden, dreieckförmigen Nut versehen ist, in der drei versetzt zueinander angeordnete Kugeln laufen. Der Variator ist von einer Hülse umgeben, die parallel zur optischen Achse drei Schlitze aufweist, die als Gerad-Führungsbahnen für die Kugeln dienen. Die Hülse ist an einem relativ zur Fassung feststehenden Kurventräger drehbar gelagert, wobei die Kugeln in Kurvenbahnen laufen, die in die Innenfläche des Kurventrägers eingearbeitet sind. Der Variator stützt sich allein über die Kugeln auf dem Kurventräger ab und wird durch diese geführt und zentriert. Bei einer Drehung der Hülse wird der Variator entlang der optischen Achse der Fassung verschoben, indem die Kugeln einerseits in der Nut am Variator der Drehung der Hülse und andererseits in der Gerad-Führungsbahn der Hülse der Kurvenbahn im Kurventräger folgen.

Um eine ungehinderte Drehbarkeit der Hülse sicherzustellen, muß zwischen dem Variator und dem Kurventräger ein ausreichender Raum vorhanden sind, der auch Maßtoleranzen im Durchmesser der Kugeln und der Tiefe der Führungsbahnen ausgleichen kann. Ein leichter Versatz des Variators senkrecht zur optischen Achse und geringfügige Verkippungen gegenüber der optischen Achse sind nicht zu vermeiden und können nur durch eine aufwendige Fertigung mit sehr engen Maßtoleranzen in vertretbaren Grenzen gehalten werden. Bei Schwergängigkeit im Lauf einzelner Kugeln am Variator kann eine Drehung des Variators nicht ausgeschlossen werden.

Der Erfindung lag daher die Aufgabe zugrunde, eine Übertragungsmöglichkeit zwischen Kurventräger, Geradführung und Variator zu schaffen, die die vorgenannten Nachteile nicht aufweist, die spielfrei arbeitet und mit der Verkippungen der Optik entgegengewirkt werden kann.

Diese Aufgabe wird bei einer zylindrischen Fassung der eingangs genannten Art erfindungsgemäß durch die Merkmale des Anspruchs 1 gelöst. Die lokale Stellung der Halterung der Kugel kann dabei auf dem Variator in axialer und/oder radialer Richtung einstellbar sein. Sie wird vorzugsweise durch eine Blattfeder mit einem Loch oder einer Delle als Kugelauflage gebildet. Andere ortsfest fixierbare Federelemente sind jedoch auch möglich. Die Geradführung kann mit Vorteil in Längsrichtung einseitig eine federnd gelagerte Anschlagleiste als eine der Laufflächen für die Kugel aufweisen. Mit der federnd und justierbar gelagerten Kugel als Übertragungsglied können insbesondere auch mehrere Führungs- und Kurvenbahnen in der Fassung vorgesehen werden und gegenseitige Überbestimmungen aufgrund von Fertigungstoleranzen ausgeglichen werden.

Ausführungsbeispiele sind in der Zeichnung schematisch dargestellt und werden nachfolgend anhand der Figuren beschrieben. Dabei zeigen:
- Fig. 1: eine zylindrische Fassung im Längsschnitt
- Fig. 2: einen Querschnitt der Fassung
- Fig. 3: die Geradführung in Aufsicht
- Fig. 4: das Übertragungsglied in einer anderen Ausführungsform
- Fig. 5: das Übertragungsglied in einer weiteren Ausführungsform
- Fig. 6: eine Geradführung mit federnder Anschlagleiste in Aufsicht
- Fig. 7: eine Ausführungsform mit außen liegender Geradführung im Querschnitt und
- Fig. 8: eine Aufsicht auf die Geradführung

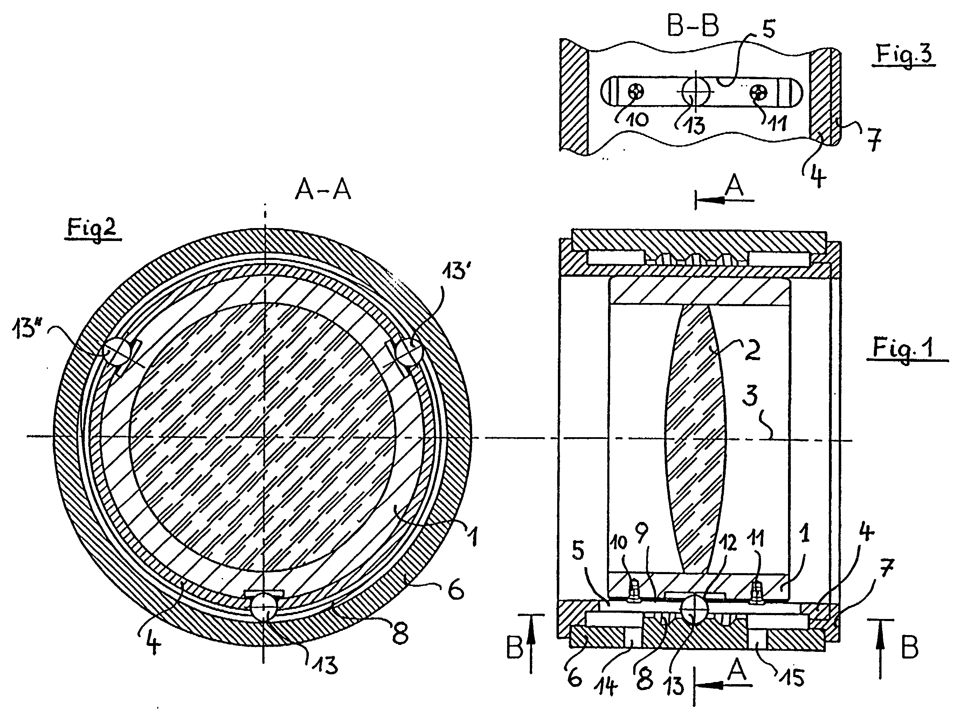

In Fig. 1 ist in der zylindrischen Hülse eines Variators 1 eine Linse 2 gehalten. Diese soll längs der Zylinderachse 3 verschiebbar sein, die auch die optische Achse eines nicht weiter dargestellten Objektivs ist. Der Variator 1 ist mit Zylinderpassung in einer feststehenden zylindrischen Hülse 4 gleitend gelagert. Die Hülse 4 enthält eine parallel zur Zylinderachse 3 verlaufende schlitzförmige Ausfräsung als Geradführung 5. Auf der Hülse 4 drehbar gelagert ist ein Kurventräger 6. Ein Vorschraubring 7 verhindert eine axiale Verschiebung des Kurventrägers 6, welcher als Fokussiereinstellung dient. In die Innenwandung des Kurventrägers 6 ist ein Trapezgewinde 8 eingearbeitet, dessen Steigung den Hub des Variators 1 in axialer Richtung bestimmt.

Auf dem Variator 1 ist eine Blattfeder 9 mit zwei Schrauben 10/11 befestigt. In eine lochförmige Öffnung 12 in der Blattfeder 9 ist eine Kugel 13 eingelegt. Anstelle einer lochförmigen Öffnung kann auch eine durch Tiefziehen eingearbeitete Delle vorgesehen sein. Ein ausreichender Bereich unterhalb der Kugelauflage ist als Federweg ausgefräst. Der Kugelmittelpunkt liegt innerhalb der Geradführung 5, d.h. die Breite der schlitzförmigen Ausfräsung ist geringfügig größer als der Kugeldurchmesser. Die Kugel 13 liegt außerdem in dem Trapezgewinde 8 des Kurventrägers 6. Durch zwei Bohrungen 14/15 in dem Kurventräger 6 hindurch können die Schrauben 10/11 betätigt werden. Um eine optimale Fluchtung zwischen der Kugelauflage in der Blattfeder 9 und dem Trapezgewinde 8 zu erreichen, kann nach Lösen der Schrauben 10/11 die Blattfeder 9 in Langlöchem axial verschoben und in einer spielfreien Position wieder fixiert werden. Außerdem ist eine geringfügige Korrektur der Lage des Variators zur optischen Achse möglich, wenn im Querschnitt der Fassung mehrere solcher Führungen vorgesehen werden.

Die Spannung der Blattfeder 9 sorgt einerseits dafür, daß die Kugel 13 immer optimal an den Flanken des Trapezgewindes anliegt. Der Durchmesser der Kugel 13 kann daher gesondert entsprechend der Breite der Geradführung 5 ausgesucht werden. Andererseits wird der Variator 1 auf der gegenüberliegenden Seite gegen die Wandung der Hülse 4 gedrückt, so daß möglichen Kippungen sofort entgegengewirkt wird. Dabei wird insbesondere bei nur einem Übertragungsglied die Lage der Kugel 13 zweckmäßigerweise so gewählt, daß der Druck in radialer Richtung auf den Massenschwerpunkt des Variators wirkt. Bei einer Drehung des Kurventrägers 6 wandert die Kugel 13 in der Geradführung 5 nach links oder rechts. Da die Kugel 13 die Wandung der Geradführung 5 nur auf ihrem Umfangskreis berührt, sind die Reibungskräfte äußerst gering. Die Spannung der Blattfeder 9 und der durch die Ausfräsung im Variator 1 begrenzte Federweg stellen sicher, daß die Kugel 13 bei der Wanderung in der Geradführung 5 nicht aus ihrer lochförmigen Auflage herausgedrückt werden kann. Der Variator 1 wird daher von der Kugel 13 mitgenommen, wobei sich die Kugel 13 in ihrer lochförmigen Auflage reibungsarm drehen kann.

Fig. 2 zeigt einen Schnitt längs der Linie A-A in Fig.1. Aus ihr ist ersichtlich, daß zweckmäßigerweise drei Übertragungsglieder mit Kugeln 13, 13', 13" um je 120° gegeneinander versetzt vorgesehen werden. Das Trapezgewinde 8 ist dazu dreigängig. Hierbei wirkt es sich besonders vorteilhaft aus, daß die Kugelauflage in axialer Richtung auf das jeweilige Trapezgewinde einstellbar ist. Verklemmungen und Verkippungen des Variators 1 in der Hülse 4 sind praktisch ausgeschlossen. Die Kräfte der Blattfedern sind gegeneinander gerichtet und heben sich dadurch gegenseitig auf.

Fig. 3 zeigt in der Aufsicht längs der Linie B-B in Fig.1, daß die Geradführung 5 in ihrer Breite dem Durchmesser der Kugel 13 entspricht.

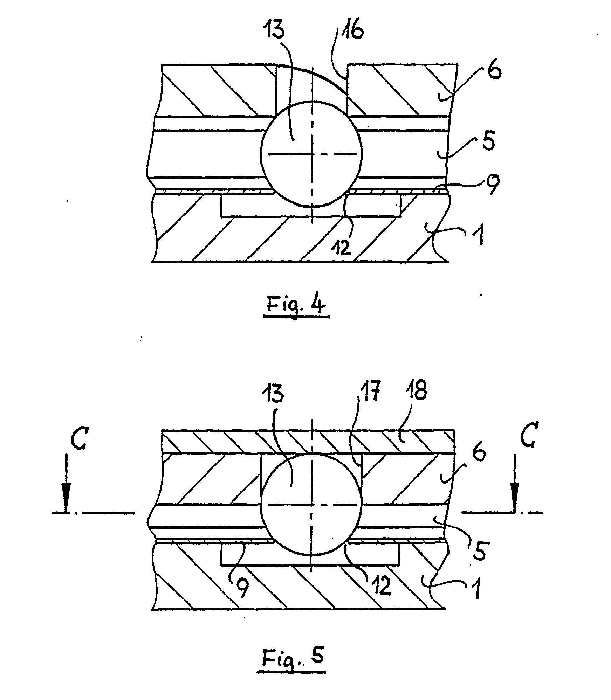

Fig. 4 zeigt eine Ausführungsform, bei der in dem Kurventräger 6 eine Führungskurve 16 eingefräst ist. Auf diese Weise können auch komplizierte Bewegungsabläufe für den Variator 1 realisiert werden. Nachteil ist, daß die Kugel 13 auf den Kanten der Kurve 16 läuft, so daß diese besonders sauber gefräst oder gefast sein müssen, was jedoch recht schwierig herzustellen ist. Evtl. Schläge auf den Kurventräger können Dellen in der Kugelanlage der Führungskurve 16 verursachen. Eine gebrauchsbedingte übliche Abnutzung der Kanten wird jedoch durch den Federdruck ausgeglichen, so daß die Spielfreiheit auf jeden Fall erhalten bleibt.

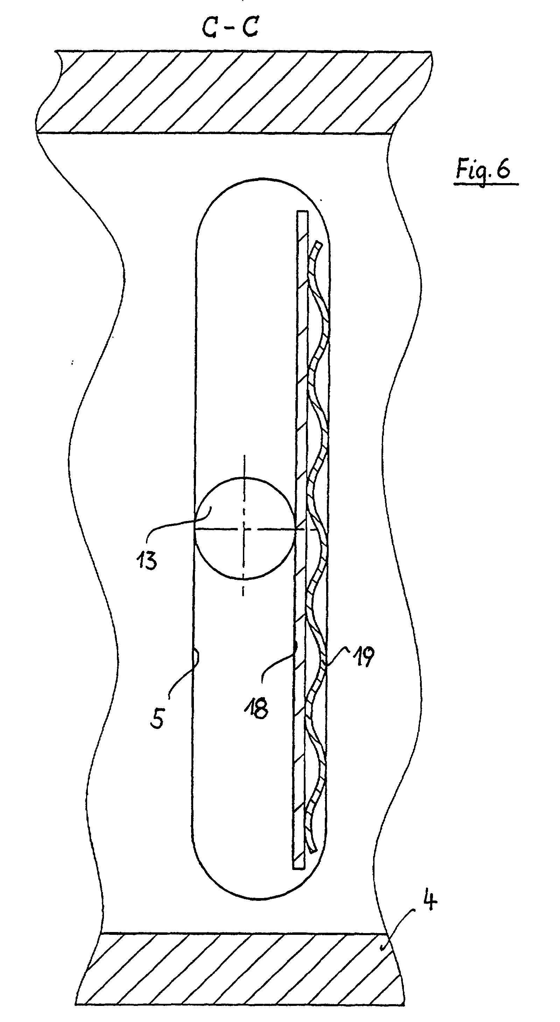

Bei der in Fig. 5 dargestellten Ausführungsform läuft die Kugel 13 vollständig in der Führungsbahn 17 im Kurventräger 6. Eine Hülse 18 verhindert das Herausfallen der Kugel 13. Die bei der Ausführungsform gemäß Fig. 4 aufgezeigten Nachteile sind damit vermieden. Allerdings müssen bei dieser Ausführungsform die Breite der Führungsbahn 17 und der Geradführung 5 beide gleich dem Durchmesser der Kugel 13 sein, um ein Spiel zwischen den Übertragungsgliedern zu vermeiden. Das stellt erhöhte Anforderungen an die Fertigung, da beide Führungskuryen getrennt hergestellt werden.

Fig. 6 zeigt eine Möglichkeit, wie die vorgenannten Anforderungen an die Fertigungsgenauigkeit verringert werden können. Die Geradführung 5 ist breiter als der Durchmesser der Kugel 13 ausgeführt. Die größere Breite wird durch eine Anschlagleiste 18 und eine Wellenfeder 19 oder andere Andruckmittel mit geeigneter Vorspannung ausgefüllt. Die Geradführung 5 paßt sich damit spielfrei an den Durchmesser der Kugel 13 an . Bei vorgegebener Führungsbahn 17 kann die Kugel 13 daher für diese optimal passend ausgesucht werden, ohne auf die Breite der Geradführung Rücksicht nehmen zu müssen. Insbesondere bei der Herstellung komplizierter Führungsbahnen, z.B. für axial oszillierende Bewegungen des Variators 1, ist dies von besonderem Vorteil.

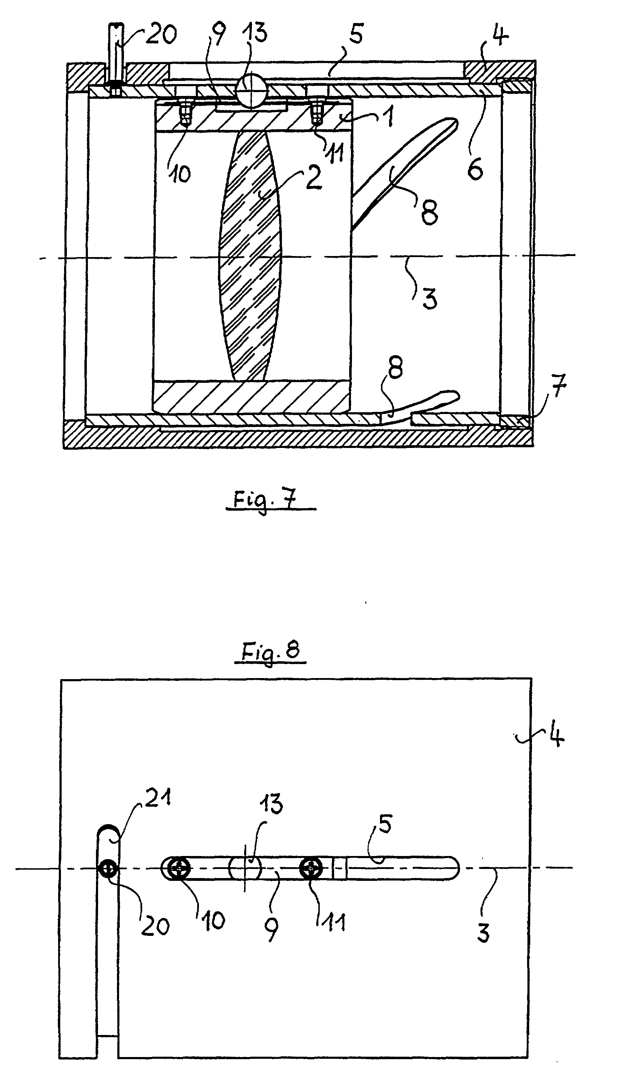

Bei den bisher beschriebenen Ausführungsbeispielen wurde ein drehbarer äußerer Kurventräger 6 verwendet, der mit einer innen liegenden Geradführung 5 zusammenwirkt. Es ist jedoch auch möglich, die Geradführung 5 in einem äußeren Fassungszylinder anzuordnen und den drehbaren Kurventräger 6 zwischen Geradführung 5 und Variator 1 einzufügen. Eine solche Anordnung ist in den Fig. 7 und 8 dargestellt. Zur Drehung des Kurventrägers 6 dient ein an diesem befestigter Stift 20, der in einem senkrecht zur optischen Achse 3 verlaufenden Schlitz 21 in der Hülse 4 geführt wird. Die Kugel 13 läuft auf den Kanten der Geradführung 6, so daß die zu Fig. 4 angegebenen Nachteile zu beachten sind. Durch eine leichte Anfasung der hier geraden Kanten kann aber auf einfache Weise Abhilfe geschaffen werden.

## Patentansprüche

1. Zylindrische Fassung für verstellbare optische Baulelemente (2) mit einer relativ zur Fassung feststehenden Hülse (4), die eine schlitzförmige Geradführung (5) aufweist, einem in einer zylindrischen Führung axial verschiebbaren inneren Variator (1), einem drehbaren Kurventräger (6), **dadurch gekennzeichnet, daß** die zylindrische Fassung mindestens eine Kugel (13) als Übertragungselement zwischen Variator (1), Geradführung (5) und Kurventräger (6) aufweist, wobei die Kugel (13) auf dem Variator (1) in einer lokal fixierbaren Halterung (9, 12) in radialer Richtung federnd und in axialer Richtung feststehend gehalten ist.

2. Zylindrische Fassung nach Anspruch 1, **dadurch gekennzeichnet, daß** die lokale Stellung der Halterung (9, 12) auf dem Variator (1) in axialer und/oder radialer Richtung einstellbar ist.

3. Zylindrische Fassung nach Anspruch 1, **dadurch gekennzeichnet, daß** als Halterung eine Blattfeder (9) mit einem Loch (12) oder Delle als Kugelauflage vorgesehen ist.

4. Zylindrische Fassung nach Anspruch 1, **dadurch gekennzeichnet, daß** die Geradführung (5) in Längsrichtung einseitig eine federnd gelagerte Anschlagleiste (18) als eine der Laufflächen für die Kugel (13) aufweist.

## Claims

1. Cylindrical mount for adjustable optical components (2), with a sleeve (4) which is fixed relative to the mount and has a slot-shaped linear guide (5), an inner variator (1) axially displaceable in a cylindrical guide, and a rotatable cam carrier (6), **characterised in that** the cylindrical mount comprises at least one ball (13) as transmission element between variator (1), linear guide (5) and cam carrier (6), wherein the ball (13) is held on the variator (1) in a locally fixable holder (9, 12) to be resilient in radial direction and fixed in axial direction.

2. Cylindrical mount according to claim 1, **characterised in that** the local setting of the holder (9, 12) on the variator (1) is adjustable in axial and/or radial direction.

3. Cylindrical mount according to claim 1, **characterised in that** as holder there is provided a leaf spring (9) with a hole (12) or indentation as ball support.

4. Cylindrical mount according to claim 1, **characterised in that** the linear guide (5) has in longitudinal direction at one side a resiliently mounted abutment strip (18) as one of the guide surfaces for the ball (13).

## Revendications

1. Monture cylindrique pour des composants optiques ajustables (2) avec une douille (4) fixe relativement à la monture, qui présente un guidage rectiligne (5) en forme de fente, un variateur intérieur (1) déplaçable axialement dans un guidage cylindrique, un support de courbe tournant (6), **caractérisée en ce que** la monture cylindrique présente au moins une bille (13) comme élément de transmission entre le variateur (1), le guidage rectiligne (5) et le support de courbe (6), où la bille (13) est retenue dans la direction radiale d'une manière élastique et dans la direction axiale d'une manière fixe sur le variateur (1) dans un logement (9, 12) pouvant être fixé localement.

2. Monture cylindrique selon la revendication 1, **caractérisée en ce que** la position locale du logement (9, 12) sur le variateur (1) est ajustable dans la direction axiale et/ou radiale.

3. Monture cylindrique selon la revendication 1, **caractérisée en ce qu'**il est prévu comme logement un ressort à lames (9) avec un trou (12) ou un creux comme support de bille.

4. Monture cylindrique selon la revendication 1, **caractérisée en ce que** le guidage rectiligne (5) présente dans la direction longitudinale, sur un côté, une baguette de butée (18) logée d'une manière élastique comme l'une des faces de roulement de la bille (13).
